# FASCICULE DE BREVET EUROPEEN

(11) **EP 3 096 618 B1**
(45) Date de publication et mention de la délivrance du brevet: **21.08.2019**
(21) Numéro de dépôt: 15704358.9
(22) Date de dépôt: 23.01.2015
(51) Int. Cl.: A01N 43/10, A01N 43/50, A01N 57/20, A01N 59/00, A01N 65/03, A01P 13/02

(54) **COMPOSITION COMPRENANT UN HERBICIDE SELECTIF ET UN EXTRAIT D'ALGUE, UTILISATION D'UN EXTRAIT D'ALGUE POUR DETOXIFIER DES PLANTES SOUMISES A UN TRAITEMENT PAR UN HERBICIDE SELECTIF**
ZUSAMMENSETZUNG MIT EINEM SELEKTIVEN HERBIZID- UND ALGENEXTRAKT, VERWENDUNG EINES ALGENEXTRAKTES ZUR ENTGIFTUNG VON MIT EINEM SELEKTIVEN HERBIZID BEHANDELTEN PFLANZEN
COMPOSITION COMPRISING A SELECTIVE HERBICIDE AND AN ALGAL EXTRACT, USE OF AN ALGAL EXTRACT FOR DETOXIFYING PLANTS SUBJECTED TO TREATMENT WITH A SELECTIVE HERBICIDE

(30) Priorité: 24.01.2014 FR 1450622; 24.01.2014 US 201461931067 P
(43) Date de publication de la demande: 30.11.2016
(73) Titulaire: Laboratoires Goëmar, 35435 Saint Malo (FR)
(72) Inventeur: PRINCEN, Jean-Pierre, 35435 Saint Malo Cedex (FR)
(74) Mandataire: Cabinet Plasseraud
(86) Numéro de dépôt international: PCT/FR2015/050162
(87) Numéro de publication internationale: WO 2015/110763

(56) Documents cités:
- WO-A1-2005/094588
- RAMSEY CRAIG L ET AL: "Cogongrass (Imperata cylindrica) Control with Imazapyr and Glyphosate Combined with and without Four Adjuvants", 1 janvier 2012 (2012-01-01), SOUTHERN JOURNAL OF APPLIED FORESTRY, SOCIETY OF AMERICAN FORESTERS, BETHESDA, MD, US, PAGE(S) 204 - 210, XP009179288, ISSN: 0148-4419 page 204 - page 209
- Diego Rubiales ET AL: "Innovations in parasitic weeds management in legume crops. A review", Agronomy for Sustainable Development, 1 avril 2012 (2012-04-01), pages 433-449, XP055130744, Paris DOI: 10.1007/s13593-011-0045-x Extrait de l'Internet: URL:http://download.springer.com/static/pd f/451/art%3A10.1007%2Fs13593-011-0045-x.pd f?auth66=1406193966_4bac1d7b5779b82013624a a0d80dc8f2&ext=.pdf [extrait le 2014-07-22]

## Description

L'augmentation des rendements est au coeur des préoccupations des agriculteurs. Or, le rendement dépend grandement du bon développement de la plante et par conséquent de sa croissance, ainsi que de sa bonne santé.

Pour assurer un rendement satisfaisant, des herbicides sont utilisés pour supprimer les adventices ou « mauvaises herbes ».

Ramsey et al, Southern Journal of Applied Forestry, vol. 36(4), pages 204-209, 2012, décrit le contrôle de cogongrass (*Imperata cylindrica*) avec imazapyr et glyphosate combinés avec et sans quatre adjuvants.

Dans la présente invention, on appelle herbicide toute substance active, ou toute composition comprenant une substance active, ayant la propriété de détruire ou limiter la croissance de toute espèce végétale. Un herbicide est dit sélectif lorsqu'il est efficace sur des adventices et est toléré par l'espèce cultivée. Dans le cadre de la présente invention, on appelle également « herbicide sélectif » un herbicide total mis en oeuvre sur une variété de culture rendue résistante aux herbicides totaux. Ainsi, le glyphosate qui est un herbicide total, lorsqu'il est appliqué à une variété de soja résistante au glyphosate est considéré dans l'invention comme un herbicide sélectif dans la culture du soja résistant au glyphosate.

Même si la sélectivité de ces herbicides est assurée, ils ne sont pas totalement indifférents à la culture mais présentent une certaine toxicité vis-à-vis de cette culture. Cette toxicité est trop faible pour conduire à la destruction de la culture mais entrave ou ralentit son développement pendant une certaine période. En effet, les herbicides utilisés dans les cultures intensives, bien que sélectifs, causent un stress important aux cultures qui se traduit notamment par un jaunissement de leurs parties chlorophylliennes après traitement par l'herbicide. Le rendement de la culture est de ce fait diminué par rapport à une culture qui n'aurait pas été traitée par un herbicide sélectif. Il existe donc un besoin en une composition qui présente les propriétés d'herbicide sélectif mais dont les effets négatifs sur la culture soient diminués, voire négligeables.

Les présents inventeurs ont trouvé qu'un extrait d'algue avec du manganèse et/ou du silicate, permet de minimiser la toxicité d'un herbicide sélectif et ainsi d'améliorer le rendement des cultures traitées par cet herbicide sélectif.

L'invention est définie par les revendications.

Ainsi, l'invention porte sur une composition comprenant un herbicide sélectif, un extrait d'algue et du manganèse et/ou un silicate.

Dans la composition selon l'invention, l'extrait d'algue est issu d'algues brunes (phéophycées) de type fucales ou laminariales, de préférence du type Ascophyllum nodosum.

Les extraits d'algues mis en oeuvre dans la composition selon l'invention peuvent être obtenus par un procédé choisi parmi les procédés décrits par la Demanderesse dans les demandes de brevet WO84/02652, EP0218770, EP0538091.

Un tel extrait d'algue peut être un extrait d'Ascophyllum Nodosum commercialisé par la Demanderesse.

La composition selon l'invention comprend également ou bien du manganèse ou bien un silicate ou bien un mélange manganèse et silicate.

Le silicate mis en oeuvre dans la composition est un silicate d'aluminium, de potassium ou de magnésium. De préférence le silicate est un silicate de potassium.

Le manganèse mis en oeuvre dans la composition est un sel de manganèse, tel que chlorure, carbonate, nitrate ou sulfate, ou bien du manganèse chélaté, tel que le manganèse-EDTA ou le manganèse-citrate. De préférence le manganèse est du manganèse-EDTA.

L'herbicide sélectif est le glyphosate, le diméthénamide-P et l'imazaquine. L'herbicide sélectif mis en oeuvre dans la composition selon l'invention est choisi dans le groupe comprenant les herbicides sélectifs utilisés dans la culture des variétés de soja conventionnel, du maïs, du blé, du colza, ou des variétés rendues résistantes par modification génétique de ces différentes cultures. On peut citer à titre d'exemple le glyphosate utilisé dans la culture des variétés de soja rendues résistantes au glyphosate, le diméthénamide-P (commercialisé par BASF sous la marque Outlook®) utilisé dans la culture des variétés conventionnelles de soja, l'imazaquine (commercialisé par BASF sous la marque Scepter®) utilisé dans la culture des variétés conventionnelles de soja.

De préférence, la composition selon l'invention comprend du glyphosate sous forme libre ou sous forme de sel, notamment sel de potassium, de sodium, d'ammonium, de triméthylsulfonium, de monoéthanolammonium, d'isopropylammonium, de triazolamine.

La composition mise en oeuvre dans le procédé selon l'invention peut se présenter sous forme liquide, sous forme de poudre, de granules, de pellets solubles dans l'eau, etc.

Selon la forme utilisée, la composition peut également comprendre des adjuvants et additifs de formulation classiquement utilisés dans les compositions herbicides, notamment des agents humidifiants, dispersants, émulsifiants, des colorants, des diluants, supports, etc.

La composition peut également se présenter sous une forme mixte comprenant dans des emballages séparés l'herbicide sélectif d'une part et dans un autre emballage l'extrait d'algue avec éventuellement le manganèse et/ou le silicate. Selon un mode de réalisation particulier, dans cette forme mixte, chacun des emballages contient une composition sous une forme différente (liquide, pulvérulente, granules, etc).

Les quantités des différents constituants seront adaptées à l'herbicide sélectif mis en oeuvre dans la composition.

Selon un mode de réalisation particulier, la composition comprend :
- 10 à 90%, de préférence 20 à 85%, plus préférentiellement 50 à 80% d'herbicide sélectif ;
- 5 à 50%, de préférence 10 à 40%, plus préférentiellement 15 à 30% d'extrait d'algue ;
- 0 à 25%, de préférence 2 à 20%, plus préférentiellement 5 à 15% de manganèse ;
- 0 à 25%, de préférence 2 à 20%, plus préférentielelement 5 à 15% de silicate ;
- 5 à 85%, de préférence 10 à 70%, plus préférentiellement 15 à 60% d'adjuvants et additifs ;
les % étant des pourcentages en poids du poids total de la composition.

Selon un mode de réalisation particulier, l'herbicide sélectif est le glyphosate. La composition est alors choisie parmi les compositions de substances actives suivantes :
Glyphosate/ extrait d'algue/ silicate;
Glyphosate/ extrait d'algue/ manganèse ;
Glyphosate/ extrait d'algue/ manganèse/ silicate,
le silicate et le manganèse étant tels que définis précédemment.
Ces compositions peuvent bien entendu également comprendre des adjuvants et additifs de formulation.
Dans ces compositions, le ratio massique entre les constiutants est le suivant :
Glyphosate/ extrait d'algue : 90/10-50/50, de préférence 80/20-50/50;
Glyphosate/ extrait d'algue/ silicate: 90/5/5-50/25/25, de préférence 80/10/10-40/20/40 ;
Glyphosate/ extrait d'algue/ manganèse : 95/5/5-50/25/25, de préférence 80/10/10-40/20/40 ;
Glyphosate/ extrait d'algue/ manganèse/ silicate: 90/5/2.5/2.5-50/30/10/10, de préférence 80/10/5/5-50/30/10/10 .

L'invention porte également sur l'utilisation d'un extrait d'algue en combinaison avec du manganèse et/ou un silicate, pour détoxifier des plantes soumises à un traitement par un herbicide sélectif choisi parmi le glyphosate, le diméthénamide-P et l'imazaquine, le silicate et le manganèse étant tels que définis précédemment.

Sans vouloir être liés par aucune théorie, les inventeurs pensent que l'action de l'extrait d'algue en combinaison avec du manganèse et/ou un silicate, permet d'amoindrir la toxicité infligée par l'herbicide sélectif à la culture traitée ou bien en limitant l'action des substances nocives sur la culture ou bien en favorisant l'évacuation des substances nocives que la culture aurait pu absorber lors de son traitement par l'herbicide sélectif. Dans la présente invention, on parlera indifféremment de détoxification des plantes ou de diminution de la toxicité liée à l'application de l'herbicide.

L'extrait d'algue et le silicate sont tels que décrits précédemment.

L'utilisation selon l'invention est tout à fait appropriée pour les plantes choisies dans le groupe comprenant les plantes agronomiquement utiles et les plantes ornementales.

Les plantes agronomomiquement utiles sont choisies dans le groupe des Angiospermes comprenant les Apiacées, les Astéracées, les Brassicacées, les Chénopodiacées, les Convolvulacées, les Cucurbitacées, les Fabacées, les Liliacées, les Polygonacées, les Rosacées, les Solanacées, les Poacées, les Vitacées.

De façon tout à fait particulière, selon l'invention on utilise un extrait d'algue pour détoxifier du soja de variété résistante au glyphosate soumis à un traitement par du glyphosate. Dans ce mode de réalisation particulier, l'extrait d'algue est appliqué par pulvérisation à raison de de 0,1 à 2,0 kg/ha, de préférence de 0,3 à 1,5 kg/ha de soja à traiter.

Selon un autre mode de réalisation, on utilise une composition choisie parmi des compositions comprenant extrait d'algue/ silicate; extrait d'algue/ manganèse ; extrait d'algue/ manganèse/ silicate, pour détoxifier des plantes soumises à un traitement par un herbicide sélectif.

Ces compositions peuvent être formulées sous forme liquide ou solide à l'aide d'adjuvants et d'additifs classiquement utilisés pour les herbicides.

Dans ces compositions, le ratio massique entre les constituants actifs est le suivant :
extrait d'algue/ silicate: 80/20-20/80, de préférence 60/40-30/70, plus préférentiellement encore environ 50/50 ;
extrait d'algue/ manganèse : 80/20-20/80, de préférence 60/40-30/70, plus préférentiellement encore environ 50/50 ;
extrait d'algue/ manganèse/ silicate: 80/10/10-40/30/30, de préférence 60/20/20-50/25/25.

Ces compositions sont appliquées par pulvérisation sur les cultures à traiter. La dose d'application dépendra bien entendu de la nature de la culture et de l'herbicide sélectif avec lequel cette culture a été traitée. Par exemple, ces compositions peuvent être appliquées à raison de 0,1 à 10 kg/ha, de préférence de 0,5 à 8 kg/ha, et plus préférentiellement encore de 1 à 5 kg/ha de culture à traiter.

Cette utilisation est faite après le traitement par l'herbicide sélectif ou simultanément au traitement par l'herbicide sélectif.
L'invention porte également sur un procédé de traitement herbicide sélectif d'une culture comprenant l'application simultanée, combinée ou séquentielle d'un herbicide sélectif et d'extrait d'algue, en combinaison avec du manganèse et/ou un silicate, l'herbicide sélectif, le silicate et le manganèse étant tels que définis précédemment.

De façon tout à fait particulière, l'invention porte sur un procédé de traitement de soja par le glyphosate comprenant l'application simultanée, combinée ou séquentielle du glyphosate et d'extrait d'algue, en combinaison avec du manganèse et/ou un silicate, le silicate et le manganèse étant tels que définis précédemment.

Le procédé selon l'invention peut être mis en oeuvre sur des plantes agronomiquement utiles et les plantes ornementales. De telles plantes sont celles mentionnées ci-dessus en lien avec l'utilisation.

Les doses d'application et les modalités d'application dépendent bien entendu de l'espèce de plantes à traiter, et de son stade de développement.

Le procédé selon l'invention peut être mis en oeuvre avec une composition telle que décrite précédemment.

Lorsque le procédé est mis en oeuvre par application séquentielle, le temps qui sépare d'une part l'application de l'herbicide sélectif de l'application de l'extrait d'algue éventuellement en combinaison avec du manganèse et/ou un silicate, ne doit pas être trop long, de façon à limiter l'effet toxique de l'herbicide sélectif sur la culture. De préférence, les deux applications ne devraient être différées que de quelques jours.

L'invention va être décrite de façon plus détaillée ci-dessous à l'aide des exemples suivants qui sont donnés à titre d'illustration uniquement.

### EXEMPLES

Dans les exemples suivants, on utilise comme extrait d'algue,un extrait d'Ascophyllum Nodosum commercialisé par la société GOEMAR. Cet extrait d'algue est désigné par ALG.
On utilise également les produits suivants avec les acronymes mentionnés entre parenthèses:
Glyphosate 360 (Gly) commercialisé par la Société Syngenta ; Complexe Manganèse-EDTA (Mn)
Silicate de potassium (KSi) diméthénamide-P (Out) commercialisé sous la marque Outlook® par la société BASF ;
imazaquine (Scep) commercialisé sous la marque Scepter® par BASF.

### Exemple 1: traitement d'un soja résistant au Glyphosate

Sous serre, on a planté du soja résistant au glyphosate et on l'a laissé pousser jusqu'au stade à 5 feuilles. On l'a séparé en différents lots qui ont chacun été traité par pulvérisation avec les différentes compositions suivantes : Glyphosate 360 (Gly), extrait d'algue (ALG), manganèse-EDTA (Mn) et silicate de potassium (KSi), seuls ou en mélanges dans les quantités données dans le tableau ci-dessous. Un lot de contrôle a également cultivé sur lequel de l'eau a été pulvérisé.

4 semaines après le traitement, on a apprécié la phytotoxicité des traitements sur la base de la surface des feuilles sur laquelle est observée une nécrose tissulaire par rapport à la surface totale des feuilles (phytotoxicité) et sur la base du pourcentage de plantes présentant au moins une feuille nécrosée.

| **N° de lot** | **Traitement** | **Composition pulvérisée (% p/v)** | **Surface nécrosée (en %)** | **plantes présentant une feuille nécrosée (en %)** |
|---|---|---|---|---|
| 0 | Contrôle non traité | 100% eau | 0 | 0 |
| 1 | Gly | 1% | 20 | 65 |
| 2 | ALG | 0.25% | 0 | 0 |
| 3 | ALG | 0.5% | 0 | 0 |
| 4 | Mn | 0.25% | 0 | 0 |
| 5 | Mn | 0.5% | 0 | 0 |
| 6 | KSi | 0.5% | 0 | 0 |
| 7 | KSi | 1% | 0 | 0 |
| 8 | Gly + ALG | 1% + 0.25% | 15 | 36 |
| 9 | Gly + ALG | 1% + 0.5% | 12 | 34 |
| 10 | Gly + Mn | 1% + 0.25% | 18 | 55 |
| 11 | Gly + Mn | 1% + 0.5% | 15 | 48 |
| 12 | Gly + KSi | 1% + 0.5% | 15 | 40 |
| 13 | Gly + KSi | 1% + 1% | 12 | 34 |
| 14 | Gly + ALG+ KSi | 1% + 0.25% + 0.5% | 8 | 20 |
| 15 | Gly + ALG + KSi | 1% + 0.5% + 1% | 1 | 12 |
| 16 | Gly + ALG + Mn | 1% + 0.25% + 0.25% | 5 | 15 |
| 17 | Gly + ALG + Mn | 1% + 0.5% + 0.5% | 1 | 10 |

### Example 2: traitement d'un soja classique avec Scepter®

Sous serre, on a planté du soja classique (c'est-à-dire non transformé génétiquement et donc non résistant au glyphosate) et on l'a laissé pousser jusqu'au stade à 5 feuilles. On l'a séparé en différents lots qui ont chacun été traité par pulvérisation avec les différentes compositions suivantes : Scepter® (Scep), extrait d'algue(GA142), manganese-EDTA (Mn) et silicate de potassium (KSi), seuls ou en mélanges dans les quantités données dans le tableau ci-dessous. Un lot de contrôle a également cultivé sur lequel de l'eau a été pulvérisé.

4 semaines après de traitement, on a apprécié la phytotoxicité des traitements sur la base de la surface des feuilles sur laquelle est observée une nécrose tissulaire par rapport à la surface totale des feuilles (phytotoxicité et sur la base du pourcentage de plantes présentant au moins une feuille nécrosée.

| **N° de lot** | **Traitement** | **Composition pulvérisée (% p/v)** | **Surface nécrosée (en %)** | **plantes présentant une feuille nécrosée (en %)** |
|---|---|---|---|---|
| 0 | Untreated control | 100% eau | 0 | 0 |
| 1 | Scep | 0.1% | 18 | 55 |
| 2 | GA142 | 0.25% | 0 | 0 |
| 3 | GA142 | 0.5% | 0 | 0 |
| 4 | Mn | 0.25% | 0 | 0 |
| 5 | Mn | 0.5% | 0 | 0 |
| 6 | KSi | 0.5% | 0 | 0 |
| 7 | KSi | 1% | 0 | 0 |
| 8 | Scep + GA142 | 0.1% + 0.25% | 12 | 44 |
| 9 | Scep + GA142 | 0.1% + 0.5% | 9 | 39 |
| 10 | Scep + Mn | 0.1% + 0.25% | 18 | 49 |
| 11 | Scep + Mn | 0.1% + 0.5% | 15 | 49 |
| 12 | Scep + KSi | 0.1% + 0.5% | 15 | 41 |
| 13 | Scep+ KSi | 0.1% + 1% | 12 | 44 |
| 14 | Scep + GA142+ KSi | 0.1% + 0.25% + 0.5% | 8 | 20 |
| 15 | Scep + GA142 + KSi | 0.1% + 0.5% + 1% | 2 | 15 |
| 16 | Scep + GA142 + Mn | 0.1% + 0.25% + 0.25% | 5 | 11 |
| 17 | Scep + GA142 + Mn | 0.1% + 0.5% + 0.5% | 1 | 10 |

### Exemple 3: traitement d'un soja classique avec Outlook®

Sous serre, on a planté du soja classique (c'est-à-dire non transformé génétiquement et donc non résistant au glyphosate) et on l'a laissé pousser jusqu'au stade à 5 feuilles. On l'a séparé en différents lots qui ont chacun été traité par pulvérisation avec les différentes compositions suivantes : OUtlook® (Out), extrait d'algue (ALG), manganèse-EDTA (Mn) et silicate de potassium (KSi), seuls ou en mélanges dans les quantités données dans le tableau ci-dessous. Un lot de contrôle a également cultivé sur lequel de l'eau a été pulvérisé.

4 semaines après de traitement, on a apprécié la phytotoxicité des traitements sur la base de la surface des feuilles sur laquelle est observée une nécrose tissulaire par rapport à la surface totale des feuilles (phytotoxicité et sur la base du pourcentage de plantes présentant au moins une feuille nécrosée.

| **N° de lot** | **Traitement** | **Composition pulvérisée (% p/v)** | **Surface nécrosée (en %)** | **plantes présentant une feuille nécrosée (en %)** |
|---|---|---|---|---|
| 0 | Contrôle non traité | 100% eau | 0 | 0 |
| 1 | Out | 0.5% | 20 | 50 |
| 2 | ALG | 0.25% | 0 | 0 |
| 3 | ALG | 0.5% | 0 | 0 |
| 4 | Mn | 0.25% | 0 | 0 |
| 5 | Mn | 0.5% | 0 | 0 |
| 6 | KSi | 0.5% | 0 | 0 |
| 7 | KSi | 1% | 0 | 0 |
| 8 | Out + ALG | 0.5% + 0.25% | 15 | 44 |
| 9 | Out + ALG | 0.5% + 0.5% | 11 | 37 |
| 10 | Out + Mn | 0.5% + 0.25% | 18 | 49 |
| 11 | Out + Mn | 0.5% + 0.5% | 16 | 49 |
| 12 | Out + KSi | 0.5% + 0.5% | 15 | 39 |
| 13 | Out+ KSi | 0.5% + 1% | 12 | 44 |
| 14 | Out + ALG+ KSi | 0.5% + 0.25% + 0.5% | 10 | 20 |
| 15 | Out + ALG + KSi | 0.5% + 0.5% + 1% | 8 | 20 |
| 16 | Out + ALG + Mn | 0.5% + 0.25% + 0.25% | 5 | 10 |
| 17 | Out + ALG + Mn | 0.5% + 0.5% + 0.5% | 1 | 8 |

Comme on peut le voir dans les tableaux des exemples 1 et 3 ci-dessus, des manifestations de phytotoxicité sont observées sur les lots 1 (traitement par l'herbicide sélectif) . Les lots 8 et 9 traités par un mélange herbicide et extrait d'algue présentent des manifestations moindres de phytotoxicité. Les lots 14-17, traités par un mélange herbicide /extrait d'algue/ manganèse-EDTA ou herbicide /extrait d'algue/ silicate de potassium présentent des manifestations de phytotoxicité tout à fait amoindries.

Ainsi, des compositions extrait d'algue/ manganèse ou extrait d'algue/ silicate diminuent notablement la phytotoxicité de l'herbicide sélectif utilisé dans le traitement du soja.

## Revendications

1. Composition comprenant un herbicide sélectif et un extrait d'algue et du manganèse et/ou un silicate, l'herbicide sélectif étant choisi parmi le glyphosate, le diméthénamide-P et l' imazaquine, l'extrait d'algue étant issu d'algues brunes de type fucales ou laminariales, le silicate étant choisi parmi le silicate d'aluminium, le silicate de potassium ou le silicate de magnésium, et le manganèse étant choisi parmi un sel de manganèse ou un manganèse chélaté.

2. Composition selon la revendication 1 comprenant :
- 10 à 90%, de préférence 20 à 85%, plus préférentiellement 50 à 80% d'herbicide sélectif ;
- 5 à 50%, de préférence 10 à 40%, plus préférentiellement 15 à 30% d'extrait d'algue ;
- 0 à 25%, de préférence 2 à 20%, plus préférentielelement 5 à 15% de manganèse ;
- 0 à 25%, de préférence 2 à 20%, plus préférentielelement 5 à 15% de silicate ;
- 5 à 85%, de préférence 10 à 70%, plus préférentiellement 15 à 60% d'adjuvants et additifs ;
l'un au moins des % de manganèse et de silicate n'étant pas nul ;
les % étant des pourcentages en poids du poids total de la composition.

3. Composition selon la revendicaiton 1 ou 2, dans laquelle l'herbicide sélectif est le glyphosate

4. Composition selon la revendication 1 choisie parmi les compositions de matières actives suivantes :
Glyphosate/ extrait d'algue/ silicate;
Glyphosate/ extrait d'algue/ manganèse;
Glyphosate/ extrait d'algue/ manganèse/ silicate;
dans lequel l'extrait d'algue est issu d'algues brunes de type fucales ou laminariales,
le silicate est choisi parmi le silicate d'aluminium, le silicate de potassium ou le silicate de magnésium, et
le manganèse est choisi parmi un sel de manganèse ou un manganèse chélaté.

5. Utilisation d'un extrait d'algue, en combinaison avec du manganèse et/ou un silicate, pour détoxifier des plantes soumises à un traitement par un herbicide sélectif, l'herbicide sélectif étant choisi parmi le glyphosate, le diméthénamide-P et l'imazaquine,
l'extrait d'algue étant issu d'algues brunes de type fucales ou laminariales,
le silicate étant choisi parmi le silicate d'aluminium, le silicate de potassium ou le silicate de magnésium, et
le manganèse étant choisi parmi un sel de manganèse ou un manganèse chélaté.

6. Utilisation selon la revendication 5, **caractérisée par le fait que** les plantes sont choisies dans le groupe comprenant les plantes agronomiquement utiles et les plantes ornementales.

7. Utilisation selon la revendication 5 ou 6, pour détoxifier du soja de variété résistante au glyphosate-soumis à un traitement par du glyphosate.

8. Procédé de traitement herbicide sélectif d'une culture comprenant l'application simultanée, combinée ou séquentielle d'un herbicide sélectif et d'extrait d'algue, en combinaison avec du manganèse et/ou un silicate, dans lequel
l'herbicide sélectif est choisi parmi le glyphosate, le diméthénamide-P et l'imazaquine,
l'extrait d'algue est issu d'algues brunes de type fucales ou laminariales,
le silicate est choisi parmi le silicate d'aluminium, le silicate de potassium ou le silicate de magnésium, et
le manganèse est choisi parmi un sel de manganèse ou un manganèse chélaté.

9. Procédé selon la revendication 8 de traitement herbicide sélectif de soja comprenant l'application simultanée, combinée ou séquentielle de glyphosate et d'extrait d'algue, en combinaison avec du manganèse et/ou un silicate, dans lequel
l'extrait d'algue est issu d'algues brunes de type fucales ou laminariales,
le silicate est choisi parmi le silicate d'aluminium, le silicate de potassium ou le silicate de magnésium, et
le manganèse est choisi parmi un sel de manganèse ou un manganèse chélaté.

10. Composition selon l'une quelconque des revendications 1 à 4, utilisation selon l'une quelconque des revendications 5 à 7 ou procédé selon la revendication 8 ou 9, **caractérisé en ce que** le silicate est un silicate de potassium ; et le manganèse est choisi parmi un chlorure, carbonate, nitrate ou sulfate de manganèse, ou le manganèse-EDTA ou le manganèse-citrate, de préférence le manganèse-EDTA.

## Patentansprüche

1. Zusammensetzung, welche ein selektives Herbizid und einen Algenextrakt und Mangan und/oder ein Silikat umfasst, wobei das selektive Herbizid aus Glyphosat, Dimethenamid-P und Imazaquin ausgewählt ist, und wobei der Algenextrakt aus Braunalgen vom Typ Fucales oder Laminariales stammt,
wobei das Silikat aus Aluminiumsilikat, Kaliumsilikat oder Magnesiumsilikat ausgewählt ist und wobei das Mangan aus einem Mangansalz oder einem chelatisierten Mangan ausgewählt ist.

2. Zusammensetzung nach Anspruch 1, umfassend:
- 10 bis 90 %, bevorzugt 20 bis 85 %, stärker bevorzugt 50 bis 80 % selektives Herbizid,
- 5 bis 50 %, bevorzugt 10 bis 40 %, stärker bevorzugt 15 bis 30 % Algenextrakt,
- 0 bis 25 %, bevorzugt 2 bis 20 %, stärker bevorzugt 5 bis 15 % Mangan,
- 0 bis 25 %, bevorzugt 2 bis 20 %, stärker bevorzugt 5 bis 15 % Silikat,
- 5 bis 85 %, bevorzugt 10 bis 70 %, stärker bevorzugt 15 bis 60 % Hilfsmittel und Zusätze;
wobei wenigstens einer der Prozentsätze Mangan und Silikat ungleich Null ist; wobei die Prozentsätze Gewichtsprozent des Gesamtgewichts der Zusammensetzung sind.

3. Zusammensetzung nach Anspruch 1 oder 2, wobei das selektive Herbizid Glyphosat ist.

4. Zusammensetzung nach Anspruch 1, ausgewählt aus den folgenden Wirkstoff-Zusammensetzungen:
Glyphosat/Algenextrakt/Silikat;
Glyphosat/Algenextrakt/Mangan;
Glyphosat/Algenextrakt/Mangan/Silikat;
wobei der Algenextrakt aus Braunalgen vom Typ Fucales oder Laminariales stammt, wobei das Silikat aus Aluminiumsilikat, Kaliumsilikat oder Magnesiumsilikat ausgewählt ist und wobei das Mangan aus einem Mangansalz oder einem chelatisierten Mangan ausgewählt ist.

5. Verwendung eines Algenextrakts in Kombination mit Mangan und/oder einem Silikat zum Entgiften von Pflanzen, die einer Behandlung mit einem selektiven Herbizid unterzogen werden, wobei das selektive Herbizid aus Glyphosat, Dimethenamid-P und Imazaquin ausgewählt ist, wobei der Algenextrakt aus Braunalgen vom Typ Fucales oder Laminariales stammt,
wobei das Silikat aus Aluminiumsilikat, Kaliumsilikat oder Magnesiumsilikat ausgewählt ist und wobei das Mangan aus einem Mangansalz oder einem chelatisierten Mangan ausgewählt ist.

6. Verwendung nach Anspruch 5, **dadurch gekennzeichnet, dass** die Pflanzen ausgewählt sind aus der Gruppe, welche landwirtschaftliche Nutzpflanzen und Zierpflanzen umfasst.

7. Verwendung nach Anspruch 5 oder 6 zur Entgiftung von Glyphosat-resistentem Soja, welches einer Behandlung mit Glyphosat unterzogen wird.

8. Verfahren zur Behandlung mit einem selektivem Herbizid einer Kultur, umfassend die gleichzeitige, kombinierte oder sequentielle Anwendung eines selektiven Herbizids und eines Algenextrakts in Kombination mit Mangan und/oder einem Silikat, wobei das selektive Herbizid aus Glyphosat, Dimethenamid-P und Imazaquin ausgewählt ist, wobei der Algenextrakt aus Braunalgen vom Typ Fucales oder Laminariales stammt, wobei das Silikat aus Aluminiumsilikat, Kaliumsilikat oder Magnesiumsilikat ausgewählt ist und wobei das Mangan aus einem Mangansalz oder einem chelatisierten Mangan ausgewählt ist.

9. Verfahren nach Anspruch 8 zur Behandlung von Soja mit einem selektivem Herbizid, umfassend die gleichzeitige, kombinierte oder sequentielle Anwendung von Glyphosat und einem Algenextrakt in Kombination mit Mangan und/oder einem Silikat, wobei das selektive Herbizid aus Glyphosat, Dimethenamid-P und Imazaquin ausgewählt ist, wobei der Algenextrakt aus Braunalgen vom Typ Fucales oder Laminariales stammt,
wobei das Silikat aus Aluminiumsilikat, Kaliumsilikat oder Magnesiumsilikat ausgewählt ist und wobei das Mangan aus einem Mangansalz oder einem chelatisierten Mangan ausgewählt ist.

10. Zusammensetzung nach einem der Ansprüche 1 bis 4, Verwendung nach einem der Ansprüche 5 bis 7 oder Verfahren nach Anspruch 8 oder 9, **dadurch gekennzeichnet, dass** das Silikat ein Kaliumsilikat ist und das Mangan ausgewählt ist aus einem Manganchlorid, Mangancarbonat, Mangannitrat oder Mangansulfat oder Mangan-EDTA oder Mangancitrat, bevorzugt Mangan-EDTA.

## Claims

1. A composition comprising a selective herbicide and an algal extract and manganese and/or a silicate, wherein
the selective herbicide is selected from glyphosate, dimethenamid-p,and imazaquin,
the algal extract originates from fucale or laminariale brown algae,
the silicate is chosen from aluminium silicate, potassium silicate or magnesium silicate, and
the manganese is chosen from a manganese salt or a chelated manganese.

2. Composition according to claim 1, comprising:
- 10 to 90%, preferably 20 to 85%, more preferentially 50 to 80% of selective herbicide;
- 5 to 50%, preferably 10 to 40%, more preferentially 15 to 30% of algal extract;
- 0 to 25%, preferably 2 to 20%, more preferentially 5 to 15% of manganese;
- 0 to 25%, preferably 2 to 20%, more preferentially 5 to 15% of silicate;
- 5 to 85%, preferably 10 to 70%, more preferentially 15 to 60% of adjuvants and additives;
at least one of the percentages of manganese and silicate not being zero;
the percentages being percentages by weight of the total weight of the composition.

3. The composition according to claim 1 or 2, wherein the selective herbicide is glyphosate.

4. A composition according to claim 1 chosen from the following compositions of active substances:
Glyphosate/algal extract/silicate;
Glyphosate/algal extract/manganese;
Glyphosate/algal extract/manganese/silicate;
wherein the algal extract originates from fucale or laminariale brown algae,
the silicate is chosen from aluminium silicate, potassium silicate or magnesium silicate, and
the manganese is chosen from a manganese salt or a chelated manganese.

5. The use of an algal extract combined with manganese and/or a silicate, to detoxify plants subjected to a treatment by a selective herbicide, wherein
the selective herbicide is chosen from glyphosate, dimethenamid-p and imazaquin,
the algal extract originates from fucale or laminariale brown algae,
the silicate is chosen from aluminium silicate, potassium silicate or magnesium silicate, and
the manganese is chosen from a manganese salt or a chelated manganese.

6. The use according to claim 5, **characterized in that** the plants are chosen from the group comprising agronomically useful plants and ornamental plants.

7. The use according to claim 5 or 6, to detoxify soybean of a glyphosate-resistant variety subjected to a treatment by glyphosate.

8. A method for selective herbicide treatment of a crop comprising the simultaneous, combined or sequential application of a selective herbicide and an algal extract, combined with manganese and/or a silicate, wherein
the selective is chosen from glyphosate, dimethenamid-p and imazaquin,
the algal extract originates from fucale or laminariale brown algae,
the silicate is chosen from aluminium silicate, potassium silicate or magnesium silicate, and
the manganese is chosen from a manganese salt or a chelated manganese.

9. A method according to claim 8 for selective herbicide treatment of soybean comprising the simultaneous, combined or sequential application of glyphosate and an algal extract combined with manganese and/or a silicate, wherein
the algal extract originates from fucale or laminariale brown algae,
the silicate is chosen from aluminium silicate, potassium silicate or magnesium silicate, and
the manganese is chosen from a manganese salt or a chelated manganese.

10. The composition according to any one of claims 1 to 4, the use according to claim 5 to 7, or the method according to claim 8 or 9, **characterized in that** the silicate is chosen from aluminium silicate, potassium silicate or magnesium silicate, preferably the silicate is a potassium silicate; and the manganese is chosen from a chloride, carbonate, nitrate or sulphate manganese, or the manganese-EDTA or the manganese-citrate, preferably manganese-EDTA.
